(19) **Europäisches Patentamt / European Patent Office / Office européen des brevets**

(11) **EP 3 569 483 A1**

(12) # EUROPEAN PATENT APPLICATION
published in accordance with Art. 153(4) EPC

(43) Date of publication:
**20.11.2019 Bulletin 2019/47**

(21) Application number: **17773316.9**

(22) Date of filing: **31.03.2017**

(51) Int Cl.:
**B62D 25/12** (2006.01)

(86) International application number:
**PCT/CN2017/079045**

(87) International publication number:
**WO 2017/167286 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2016 CN 201610203772**

(71) Applicant: **PSA Automobiles SA
78300 Poissy (FR)**

(72) Inventors:
• **WANG, Ziye
Shanghai 200233 (CN)**
• **PENG, Ronghua
Shanghai 200233 (CN)**
• **LI, Song
Shanghai 200233 (CN)**
• **LIU, Cuiping
Shanghai 200233 (CN)**
• **ZHANG, Zhiqian
Shanghai 200233 (CN)**
• **BI, Jiabin
Shanghai 200233 (CN)**
• **WANG, Mingyue
Shanghai 200233 (CN)**

(54) **ENGINE HOOD AND MANUFACTURING METHOD THEREFOR, AND MOTOR VEHICLE INCLUDING SAME**

(57) The present disclosure provides a bonnet, including a bonnet outer panel; and a bonnet inner panel, wherein the edge of the bonnet inner panel includes one or more reinforced ribs. The bonnet can prevent the bonnet inner panel from coming into contact with a vehicle body. The present disclosure also provides a manufacturing method of the bonnet and a motor vehicle containing the bonnet.

**Fig. 2**

## Description

## CROSS REFERENCE

This application claims priority of Chinese Patent Application No. 2016102037724, filed on April 1, 2016, entitled by "Bonnet, Manufacturing Method thereof and Motor Vehicle Containing the Same", the disclosures of which are incorporated in their entirety by reference herein.

## TECHNICAL FIELD

The present disclosure relates to the technical field of automobile manufacturing, in particular, to a bonnet, a manufacturing method thereof and a motor vehicle containing the same.

## BACKGROUND

A head injury criterion (HIC) is an important indicator for evaluating the damage to a pedestrian when a vehicle collides with the pedestrian. As the head of the pedestrian, who is knocked out, hits against the bonnet, the relevant design of the bonnet has a very important effect on value of HIC.

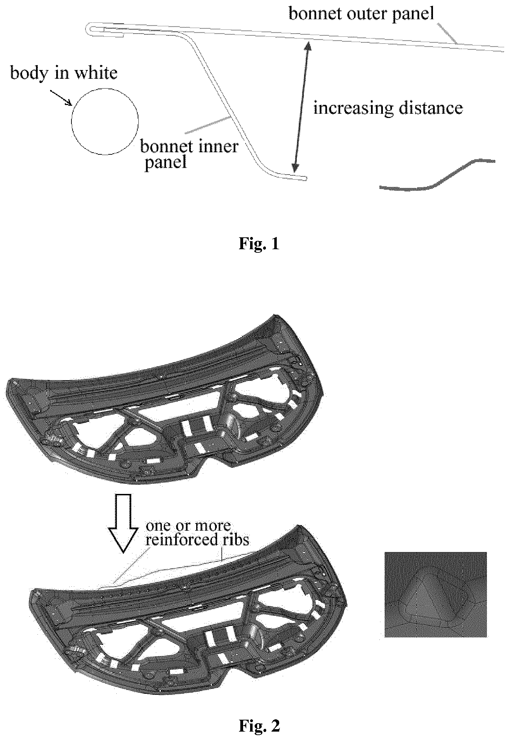

In the prior art, in order to improve the protection of the pedestrian, the distance between a bonnet inner panel and a bonnet outer panel is often increased to obtain more space to absorb the impact energy from the head of the pedestrian, as shown in Fig.1.

However, in consideration of the stamping feasibility of the bonnet inner panel and the constraint on the appearance and molding of the bonnet outer panel, it is impossible to expand the space too much, thereby causing that part of the HIC values remain high.

## SUMMARY

In order to solve the technical problem that the pedestrian has higher local HIC values during the collision between the vehicle and pedestrian, the present disclosure provides a bonnet, a manufacturing method thereof and a motor vehicle containing the same.

According to an aspect of the present disclosure, a bonnet is provided. The bonnet includes:

a bonnet outer panel;

a bonnet inner panel, wherein one or more reinforced ribs are provided at the edge of the bonnet inner panel to reduce or avoid the contact between the bonnet inner panel and body in white under the impact of a hit pedestrian's head.

Optionally, the edge of the bonnet inner panel includes a leading edge, a trailing edge and/or lateral edges of the bonnet inner panel.

Optionally, the reinforced ribs are located at the facade and/or plane of the edge of the bonnet inner panel.

Optionally, the reinforced ribs are integrally formed with the bonnet inner panel.

Optionally, the reinforced ribs are formed by protruding outwardly and/or denting inwardly the edge of the bonnet inner panel.

According to another aspect of the present disclosure, a method for manufacturing the bonnet is provided. The method includes the foiling steps:

forming a bonnet outer panel;

forming a bonnet inner panel; wherein one or more reinforced ribs are formed at the edge of the bonnet inner panel and used to reduce or avoid the contact between the bonnet inner panel and body in white under the impact of a hit pedestrian's head.

Optionally, the edge of the bonnet inner panel includes a leading edge, a trailing edge and/or lateral edges of the bonnet inner panel; and/or
the reinforced ribs are formed at the facade and/or plane of the edge of the bonnet inner panel.

Optionally, the reinforced ribs are integrally formed with the bonnet inner panel.

Optionally, the reinforced ribs are formed by protruding outwardly and/or denting inwardly the edge of the bonnet inner panel.

According to the present disclosure, by adopting the bonnet, the manufacturing method thereof and the motor vehicle containing the same, the value of HIC can be decreased by reducing or preventing contact between the bonnet inner panel and a body in white under the impact of the hit pedestrian's head so as to improve the protection effect on the pedestrian.

## BRIEF DESCRIPTION OF THE DRAWINGS

In order to more clearly illustrate the technical solutions in embodiments of the present disclosure or the prior art, the drawings used in the embodiments or the description of the prior art will be briefly described below. It is obvious for those skilled in the art that the drawings in the following description are only some embodiments of the present disclosure and other drawings can also be obtained from these drawings without departing from the scope and range of the present disclosure.

Fig. 1 is a schematic diagram showing a method for improving the value of HIC in the prior art.

Fig. 2 is a schematic diagram showing an improved structure of a bonnet inner panel according to an embodiment 1 of the present disclosure.

Fig. 3 is a schematic diagram showing a first impact value and a second impact value of HIC in the prior art.

Fig. 4 is a schematic diagram of a first impact value and a second impact value of HIC in the embodiment 1 of the present disclosure.

Fig. 5 is a flow chart showing a method of manufacturing a bonnet according to an embodiment 3 of the present disclosure.

**DETAILED DESCRIPTION**

The technical solutions in the embodiments of the present disclosure are clearly and completely described below with reference to the accompanying drawings so that the purpose, technical solutions and advantages of the embodiments of the present disclosure will be clear. The embodiments described are parts of the disclosure and not all of them. All other embodiments, obtained by those skilled in the art based on the embodiments of the present disclosure, fall within the protection range of the present disclosure.

Embodiment 1

According to the embodiment 1, a bonnet is provided including:

a bonnet outer panel;

a bonnet inner panel, wherein one or more reinforced ribs are provided at the edge of the bonnet inner panel to reduce or avoid the contact between the bonnet inner panel and body in white under the impact of a hit pedestrian's head.

The bonnet inner panel in the prior art is shown in the upper part of Fig. 2 while in the embodiment 1 of the present disclosure, one or more reinforced ribs (as shown in the lower part of Fig. 2) are provided at the edge of the bonnet inner panel to reduce or avoid the contact between the bonnet inner panel and body in white (BIW) under the impact of a hit pedestrian's head, thereby decreasing the value of HIC.

In one of embodiments of the present disclosure, the following formula can be used to calculate the result of the acceleration-time history:

$$HIC = (t_2 - t_1)\left[\frac{1}{t_2 - t_1}\int_{t_1}^{t_2} a\,dt\right]^{2.5}$$

wherein, $a$ is the measured combined acceleration in a unit of g (1g is equal to 9.81m/s$^2$); $t_1$ and $t_2$ are the two moments in the impact process (in a unit of s), indicating a certain time interval between the beginning of the recording and the end of the recording, in which HIC takes its maximum value ($t_2$ - $t_1$ is less than or equal to 15ms).

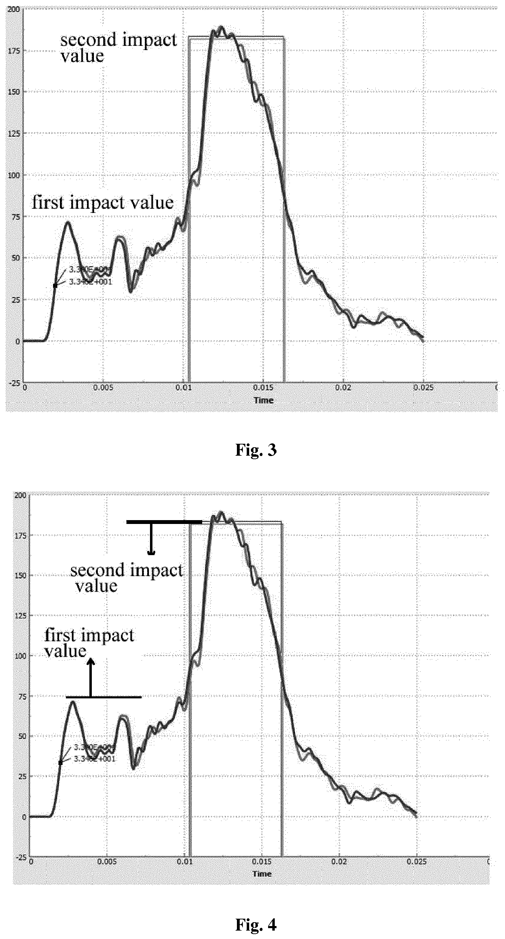

Specifically, in the case that no reinforced ribs are provided in the bonnet inner panel as shown in Fig. 3, when the pedestrian's head impacts on the bonnet outer panel, a first impact value is firstly formed and a second impact value is subsequently formed after the bonnet inner panel supports and comes in contact with the rigid body in white. The final value of HIC is still large even if the first impact value is small according to the mathematical calculation method of the HIC since the second impact value is quite large.

In the case that reinforced ribs are provided in the bonnet inner panel as shown in Fig. 4, the first impact value will be relatively increased due to the supporting effect of the reinforced ribs on the bonnet outer panel, while and the second impact value will be relatively decreased due to the presence of the reinforced ribs, which reduce or avoid the contact between the bonnet inner panel and body in white under the impact of a hit pedestrian's head to the greatest extent, so that the value of HIC will generally fall due to the combined effect of the relatively increased first impact value and relatively reduced second impact value according to the mathematical calculation formula of the HIC, which ultimately reduces the damage to the pedestrian and improves the protection effect on the pedestrian.

Alternatively, the edge of the bonnet inner panel includes a leading edge, a trailing edge and/or lateral edges of the bonnet inner panel.

Alternatively, the reinforced ribs are located at the facade and/or plane of the edge of the bonnet inner panel.

Alternatively, the reinforced ribs are integrally formed with the bonnet inner panel.

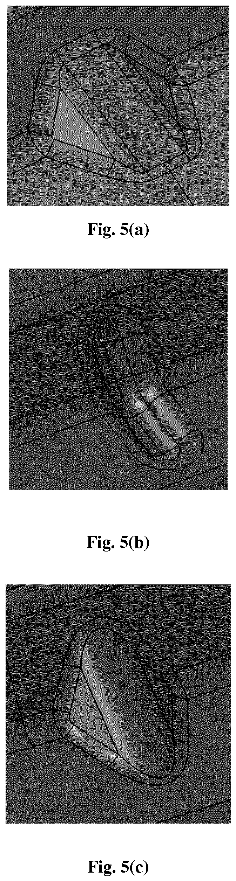

Alternatively, as shown in Figs.5(a) to 5(a), the reinforced ribs are formed by protruding outwardly and/or denting inwardly the edge of the bonnet inner panel.

In one of embodiments of the present disclosure, the bonnet outer panel and bonnet inner panel can be made of a metal material such as aluminum or iron, or may be made of a non-metal material such as a resin.

Embodiment 2

According to the embodiment 2 of the present disclosure, a motor vehicle including the bonnet abovementioned is provided.

Embodiment 3

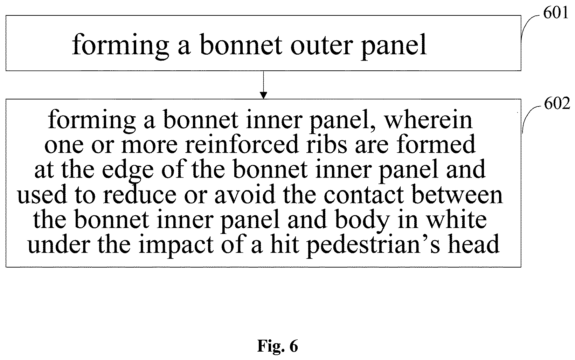

According to the embodiment 3 with reference to Fig.6 of the present disclosure, a method of manufacturing a bonnet is provided. The method includes the following steps:

step 601: forming a bonnet outer panel;

step 602: forming a bonnet inner panel, wherein one or more reinforced ribs are formed at the edge of the bonnet inner panel, and used to reduce or avoid the contact between the bonnet inner panel and body in white under the impact of a hit pedestrian's head.

Alternatively, the edge of the bonnet inner panel includes a leading edge, a trailing edge and/or lateral edges of the bonnet inner panel;
and/or, the reinforced ribs are located at the facade and/or plane of the edge of the bonnet inner panel.
Alternatively, the reinforced ribs are integrally formed with the bonnet inner panel.
Alternatively, the reinforced ribs are formed by protruding outwardly and/or denting inwardly the edge of the bonnet inner panel.
According to the present disclosure, by adopting the bonnet, the manufacturing method thereof and the motor vehicle containing the same, the value of HIC can be decreased by reducing or preventing contact between the bonnet inner panel and a body in white under the impact of the hit pedestrian's head so as to improve the protection effect on the pedestrian.
It should be noted that the embodiments above are only used to illustrate the technical solutions of the present disclosure, and are not limited thereto; although the present disclosure has been described in detail with reference to the foregoing embodiments, it will be understood by those of skill in the art that modification in technical solutions described in the foregoing embodiments may be made or equivalent replacement for partial technical features can be made and the modification and replacement will no longer cause the nature of the corresponding technical solution depart from the spirit and scope of the present disclosure.

**Claims**

1. A bonnet, comprising:

   a bonnet outer panel;
   a bonnet inner panel, wherein one or more reinforced ribs are provided at the edge of the bonnet inner panel to reduce or avoid the contact between the bonnet inner panel and body in white under the impact of a hit pedestrian's head.

2. The bonnet according to claim 1, wherein the edge of the bonnet inner panel comprises a leading edge, a trailing edge and/or lateral edges of the bonnet inner panel.

3. The bonnet according to claim 1, wherein the reinforced ribs are located at the facade and/or plane of the edge of the bonnet inner panel.

4. The bonnet according to claim 1, wherein the reinforced ribs are integrally formed with the bonnet inner panel.

5. The bonnet according to claim 1, wherein the reinforced ribs are formed by protruding outwardly and/or denting inwardly the edge of the bonnet inner panel.

6. A motor vehicle, comprising the bonnet according to any one of claims 1-5.

7. A method for manufacturing a bonnet, comprising the following steps:

   forming a bonnet outer panel;
   forming a bonnet inner panel, wherein one or more reinforced ribs are formed at the edge of the bonnet inner panel, the reinforced ribs being used to reduce or avoid the contact between the bonnet inner panel and body in white under the impact of a hit pedestrian's head.

8. The method for manufacturing a bonnet according to claim 7, wherein:

   the edge of the bonnet inner panel comprises a leading edge, a trailing edge and/or lateral edges of the bonnet inner panel; and/or
   the reinforced ribs are formed at the façade and/or plane of the edge of the bonnet inner panel.

9. The method for manufacturing a bonnet to according claim 7, wherein the reinforced ribs are integrally formed with the bonnet inner panel.

10. The method for manufacturing a bonnet according to claim 7, wherein the reinforced ribs are formed by protruding outwardly and/or denting inwardly the edge of the bonnet inner panel.

bonnet outer panel

body in white

bonnet inner
panel

increasing distance

**Fig. 1**

one or more
reinforced ribs

**Fig. 2**

**Fig. 3**

**Fig. 4**

Fig. 5(a)

Fig. 5(b)

Fig. 5(c)

forming a bonnet outer panel — 601

forming a bonnet inner panel, wherein
one or more reinforced ribs are formed
at the edge of the bonnet inner panel and
used to reduce or avoid the contact between
the bonnet inner panel and body in white
under the impact of a hit pedestrian's head — 602

Fig. 6

# INTERNATIONAL SEARCH REPORT

| International application No. |
|---|
| PCT/CN2017/079045 |

## A. CLASSIFICATION OF SUBJECT MATTER

B62D 25/12 (2006.01) i

According to International Patent Classification (IPC) or to both national classification and IPC

## B. FIELDS SEARCHED

Minimum documentation searched (classification system followed by classification symbols)

B62D

Documentation searched other than minimum documentation to the extent that such documents are included in the fields searched

Electronic data base consulted during the international search (name of data base and, where practicable, search terms used)

CNABS, CNKI, VEN: rib, edge, hood, cover, bonnet, enforce

## C. DOCUMENTS CONSIDERED TO BE RELEVANT

| Category* | Citation of document, with indication, where appropriate, of the relevant passages | Relevant to claim No. |
|---|---|---|
| X | CN 205113461 U (CHONGQING CHANG'AN AUTOMOBILE CO., LTD.) 30 March 2016 (30.03.2016) description, paragraph [0019], and figure 1 | 1-4, 6-9 |
| A | CN 204998628 U (GUANGZHOU AUTOMOBILE GROUP CO., LTD.) 27 January 2016 (27.01.2016) the whole document | 1-10 |
| A | WO 2015159674 A1 (KOBE STEEL LTD) 22 October 2015 (22.10.2015) the whole document | 1-10 |
| A | CN 203306107 U (DONGFENG MOTOR CORPORATION) 27 November 2013 (27.11.2013) the whole document | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 May 2017 | 21 June 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer HAN, Yu Telephone No. (86-10) 62085298 |
|---|---|

Form PCT/ISA /210 (second sheet) (July 2009)

**INTERNATIONAL SEARCH REPORT**
Information on patent family members

International application No.

PCT/CN2017/079045

| Patent Documents referred in the Report | Publication Date | Patent Family | Publication Date |
|---|---|---|---|
| CN 205113461 U | 30 March 2016 | None | |
| CN 204998628 U | 27 January 2016 | None | |
| WO 2015159674 A1 | 22 October 2015 | JP 2015205566 A | 19 November 2015 |
| | | DE 102015105785 B4 | 13 April 2017 |
| | | DE 102015105785 A1 | 22 October 2015 |
| | | CN 105873809 A | 17 August 2016 |
| CN 203306107 U | 27 November 2013 | None | |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2016102037724